# EUROPEAN PATENT APPLICATION

(11) **EP 4 679 571 A1**
(43) Date of publication of application: **14.01.2026**
(21) Application number: 25157417.4
(22) Date of filing: 12.02.2025
(51) Int. Cl.: H01M 10/658, H01M 50/103, H01M 50/342, H01M 50/30

(54) **SECONDARY BATTERY**

(30) Priority: 12.07.2024 KR 20240092646
(71) Applicant: SAMSUNG SDI CO., LTD., Yongin-si, Gyeonggi-do 17084 (KR)
(72) Inventor: CHOI, Yunseok, 17084 Yongin-si, Gyeonggi-do (KR); WON, Narae, 17084 Yongin-si, Gyeonggi-do (KR); EUM, Yul, 17084 Yongin-si, Gyeonggi-do (KR)
(74) Representative: Gulde & Partner

(57) **Abstract**

A secondary battery includes: an electrode assembly including a cathode, an anode, and a separator between the cathode and the anode; a case accommodating the electrode assembly in an internal space, and including a vent portion; a cap plate covering an upper portion of the case to seal the case; and an insulator between the electrode assembly and the case within the case. The vent portion is located at a side of the case opposite to the cap plate, and at least an area of the insulator overlapping with the vent portion includes a mesh area having a mesh shape.

## Description

### BACKGROUND

### 1. Field

Aspects of embodiments of the present disclosure relate to a secondary battery.

### 2. Description of the Related Art

Unlike primary batteries that cannot be recharged, secondary batteries are batteries that may be charged and discharged. Low-capacity secondary batteries are used in small portable electronic devices, such as smartphones, feature phones, laptop computers, digital cameras, and camcorders, and high-capacity secondary batteries are widely used as driving power sources and power storage batteries for motors in hybrid vehicles, electric vehicles, and the like. Such a secondary battery includes an electrode assembly including a cathode and an anode, a case for accommodating the electrode assembly, and an electrode terminal connected to the electrode assembly.

The above information disclosed in this Background section is for enhancement of understanding of the background of the present disclosure, and therefore, it may contain information that does not constitute related (or prior) art.

### SUMMARY

One or more embodiments of the present disclosure may be directed to a secondary battery having improved stability.

These and other aspects and features of the present disclosure will be described in or will be apparent from the following description of embodiments of the present disclosure.

However, the present disclosure is not limited to the above aspects and features, and the above and additional aspects and features will be set forth, in part, in the following description, and in part, may be apparent therefrom, or may be learned by practicing one or more of the presented embodiments of the present disclosure.

According to one or more embodiments of the present disclosure, a secondary battery includes: an electrode assembly including a cathode, an anode, and a separator between the cathode and the anode; a case accommodating the electrode assembly in an internal space, and including a vent portion; a cap plate covering an upper portion of the case to seal the case; and an insulator between the electrode assembly and the case within the case. The vent portion is located at a side of the case opposite to the cap plate, and at least an area of the insulator overlapping with the vent portion includes a mesh area having a mesh shape.

In an embodiment, a separation space may be located between the mesh area and the vent portion.

In an embodiment, the insulator may further include: an outer area concurrently in contact with the electrode assembly and the case at each of opposite sides of the mesh area; and an intermediate area between the mesh area and the outer area, and in contact with the electrode assembly. The separation space may extend beneath the intermediate area.

In an embodiment, an area of the mesh area may be greater than an area of the vent portion.

In an embodiment, a sieve size of the mesh area may be in a range of 0.05 mm to 2 mm, preferably 0.10 mm to 1,9 mm., 0.60 mm to 1.8 mm, 1.2 mm to 1.7 mm.

In an embodiment, a thickness of the mesh area may be greater than or equal to a thickness of the intermediate area.

In an embodiment, a length of the mesh area may be in a range of 100 % to 200 % of a length of the vent portion, preferably 120 % to 180 %, more preferably 140 % to 160 %.

In an embodiment, a length of the outer area may be in a range of 2 % to 25 % of an inner width of the case, preferably 5 % to 22 %, 8 % to 19 %, 11 % to 16 %.

In an embodiment, a separation distance between the mesh area and the vent portion may be in a range of 0.5 mm to 3 mm, preferably 0.7 mm to 2,8 mm, 0.9 mm to 2.6 mm, 1.1 mm to 2.4 mm, 1.3 mm to 2.2 mm, 1.5 mm to 2.0 mm.

In an embodiment, a material of the insulator may include at least one selected from among polyvinyl chloride (PVC), polyethylene (PE), polypropylene (PP), polycarbonate (PC), nylon, polyethylene terephthalate (PET), polyurethane (PU), polyphenylene sulfide (PPS), polystyrene (PS), acrylonitrile-butadiene-styrene (ABS), polyimide (PI), polyvinylidene fluoride (PVDF), an ethylene propylene diene monomer (EDPM), or polyphenylene ether (PPE).

According to one or more embodiments of the present disclosure, a secondary battery includes: an electrode assembly including a cathode, an anode, and a separator between the cathode and the anode; a case accommodating the electrode assembly in an internal space, and including a vent portion; a cap plate covering an upper portion of the case to seal the case; and an insulator between the electrode assembly and the case within the case. The insulator includes a mesh area overlapping with the vent portion, and an area of the mesh area is greater than an area of the vent portion.

In an embodiment, the vent portion may be located at a side opposite to the cap plate.

In an embodiment, the mesh area may be spaced from the vent portion.

In an embodiment, the insulator may further include an outer area that may be concurrently in contact with the electrode assembly and the case at each of opposite sides of the mesh area.

In an embodiment, the insulator may further include an intermediate area between the mesh area and the outer area, and in contact with the electrode assembly.

In an embodiment, a thickness of the intermediate area may be less than or equal to a thickness of the mesh area.

In an embodiment, a sieve size of the mesh area may be in a range of 0.05 mm to 2 mm.

In an embodiment, a length of the mesh area may satisfy x< y ≤ x+2xz/c, where y may denote the length of the mesh area, x may denote a length of the vent portion, c may denote a thickness of the case, and d may denote a thickness of a separation space.

In an embodiment, a length of the outer area may be in a range of 2 % to 25 % of an inner width of the case.

In an embodiment, a separation distance between the mesh area and the vent portion may be in a range of 0.5 mm to 3 mm.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings, in which:
FIG. 1 is a schematic perspective view illustrating an example of a secondary battery according to an embodiment of the present disclosure;
FIG. 2 is a schematic cross-sectional view illustrating an example of a cross section taken along the line A-A' of FIG. 1;
FIG. 3 is a schematic bottom view illustrating a bottom surface of the secondary battery of FIG. 1;
FIG. 4 is an enlarged view of a portion of the cross-section of FIG. 2;
FIG. 5 is a schematic cross-sectional view illustrating an example of a cross section taken along the line B-B' of FIG. 2; and
FIG. 6 is a schematic cross-sectional view illustrating an example of a portion of a cross section taken along the line A-A' of FIG. 1.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

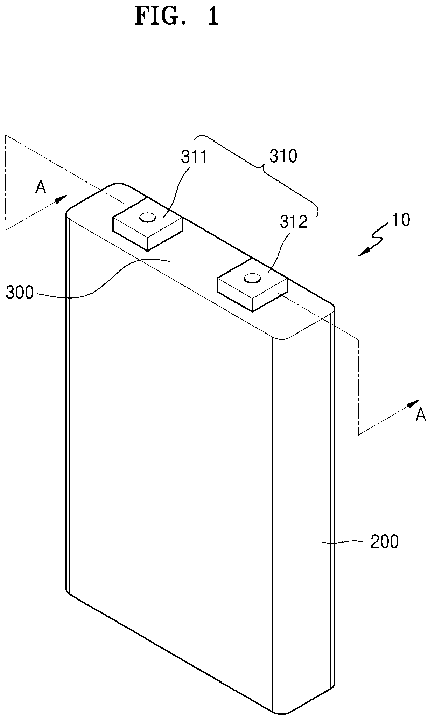

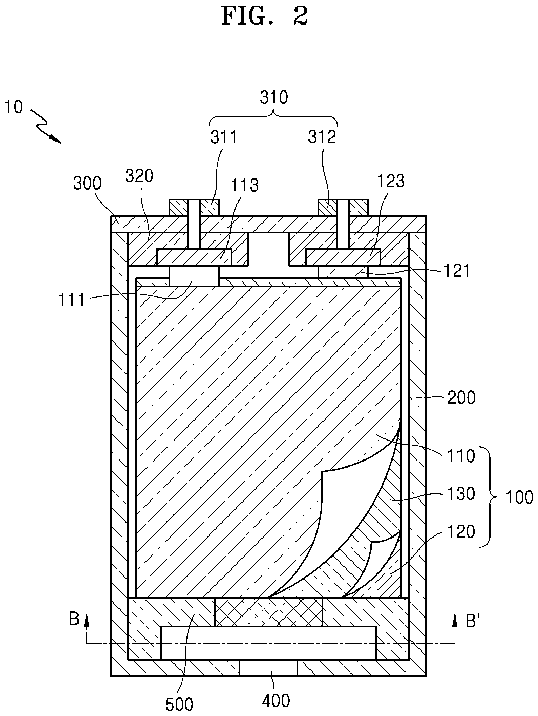

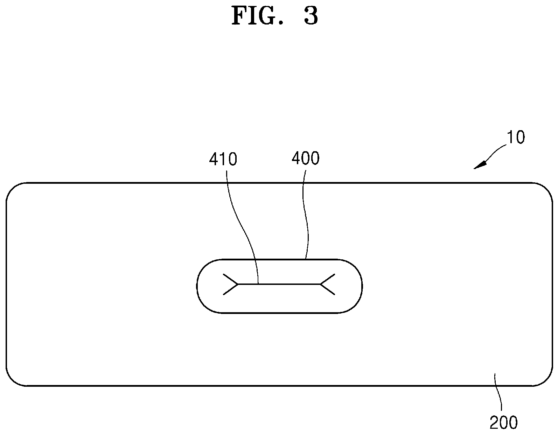

FIG. 1 is a schematic perspective view illustrating an example of a secondary battery 10 according to an embodiment of the present disclosure. FIG. 2 is a schematic cross-sectional view illustrating an example of a cross section taken along the line A-A' of FIG. 1. FIG. 3 is a schematic bottom view illustrating a bottom surface of the secondary battery 10 of FIG. 1.

Referring to FIGS. 1 to 3, the secondary battery 10 according to the present embodiment may include at least one electrode assembly 100 in which a separator 130 that is an insulator is interposed between a cathode 110 and an anode 120 and then wound, a case 200 in which the electrode assembly 100 is embedded, a cap plate 300 that covers an upper portion of the case 200 to seal the case 200, and a terminal portion 310 electrically connected to the electrode assembly 100.

For convenience of illustration, the secondary battery 10 according to the present embodiment may be described in more detail in the context of a prismatic lithium ion secondary battery. However, the present disclosure is not limited thereto, and the aspects and features described herein may be applied to various suitable kinds of batteries, such as lithium polymer batteries or cylindrical batteries.

The cathode 110 and the anode 120 may be wound after the separator 130, which is the insulator, is interposed therebetween. However, the present disclosure is not limited thereto, and the electrode assembly 100 may have a structure in which the cathode 110 and the anode 120, each including a plurality of sheets, are alternately stacked with the separator 130 interposed therebetween.

When the electrode assembly 100 is a wound stack, a winding axis may be parallel to a longitudinal direction of the case 200. In addition, the electrode assembly 100 may be a stack kind rather than a wound kind, and the shape of the electrode assembly 100 is not particularly limited. In addition, the electrode assembly 100 may be a Z-stack electrode assembly 100 in which the cathode 110 and the anode 120 are inserted into both sides (e.g., opposite sides) of the separator 130 bent in a Z-stack. In addition, two or more electrode assemblies 100 may be stacked, such that long side surfaces thereof are adjacent to each other, and may be accommodated inside the case 200. As such, the number of the electrode assemblies 100 is not particularly limited.

The cathode 110 and the anode 120 may include coated portions that are areas in which an active material is applied onto a current collector including (e.g., made of) a thin metal foil, and uncoated portions that are uncoated areas onto which an active material is not applied.

The cathode 110 may include a cathode coated portion formed by applying a cathode active material, such as a transition metal oxide, onto a cathode current collector plate including (e.g., made of) a metal foil of aluminum, an aluminum alloy, or the like, and a cathode tab 111 (e.g., a cathode uncoated portion) that is an area onto which a cathode active material is not applied. The cathode active material may be a lithium-containing transition metal oxide, such as LiCoO₂, LiNiO₂, LiMnO₂, LiMnO₄, or a lithium chalcogenide compound.

The cathode tab 111 may serve as a path for a current flow between the cathode 110 and a cathode current collector 113. In some embodiments, when the cathode 110 is manufactured, the cathode tab 111 may be formed by being cut in advance to protrude to one side. The cathode tab 111 may protrude to the one side further than the separator 130 without a separate cutting.

The anode 120 may include an anode coated portion formed by applying an anode active material, such as graphite or carbon, onto an anode current collector plate including (e.g., made of) a metal foil of copper, a copper alloy, nickel, a nickel alloy, or the like, and an anode tab 121 (e.g., an anode uncoated portion) that is an area onto which an anode active material is not applied. The anode active material may be a carbon material, such as crystalline carbon, amorphous carbon, a carbon composite, or a carbon fiber, a lithium metal or lithium alloy, or the like.

The anode tab 121 may serve as a path for a current flow between the anode 120 and an anode current collector 123. In some embodiments, when the anode 120 is manufactured, the anode tab 121 may be formed by being cut in advance to protrude to the other side. The anode tab 121 may protrude to the other side further than the separator 130 without a separate cutting.

The anode tab 121 of the anode 120 and the cathode tab 111 of the cathode 110 are positioned at end portions, respectively, of the electrode assembly 100 as described above. For example, the anode tab 121 may be positioned on a side surface of a right end portion of the electrode assembly 100, and the cathode tab 111 may be positioned on a side surface of a left end portion of the electrode assembly 100. As another example, the anode tab 121 and the cathode tab 111 may be positioned on one surface (e.g., the same surface as each other) in the same direction as each other. The terms "left and right sides" are used based on the secondary battery 10 illustrated in FIG. 1, but it should be understood that the positions thereof may be changed when the secondary battery 10 is rotated laterally or vertically.

In some embodiments, the electrode assembly 100 may be accommodated in the case 200 along with an electrolyte. In addition, in the electrode assembly 100, the anode current collector 123 and the cathode current collector 113 may be positioned to be welded and connected to the anode tab 121 of the anode 120 and the cathode tab 111 of the cathode 110, respectively.

The separator 130 is a membrane positioned between the anode 120 and the cathode 110 to prevent electrical contact between the anode 120 and the cathode 110, and serves to prevent a short circuit between the anode 120 and the cathode 110 while enabling the movement of lithium ions.

An area of the separator 130 may be greater than an area of each of the anode 120 and the cathode 110, and thus, the separator 130 may be protrude toward the anode current collector 123 and the cathode current collector 113 further than the anode 120 and the cathode 110.

The separator 130 may include (e.g., may be made of) polyethylene, polypropylene, or a composite film of polyethylene and polypropylene. However, the present disclosure is not limited thereto, and a material of the separator 130 is not particularly limited. In some embodiments, the separator 130 may be replaced with a solid electrolyte.

The case 200 may form the overall exterior of the secondary battery 10, and may have an approximately hexahedral shape with an opening formed in one side to accommodate the electrode assembly 100 in an internal space thereof. However, the present disclosure is not limited thereto, and the case 200 may have various suitable shapes.

The electrolyte may be accommodated inside the case 200 along with the electrode assembly 100, and the opening of the case 200 may be sealed by the cap plate 300.

The case 200 may include (e.g., may be made of) a conductive metal, such as aluminum, an aluminum alloy, or a nickel-plated steel. In addition, the case 200 may provide a space in which the electrode assembly 100 is accommodated, and may include a vent portion 400 at one side.

The cap plate 300 may be connected to (e.g., coupled to or attached to) one side of the case 200 to seal the internal space of the case 200. As an example, after the cap plate 300 is disposed on an upper end of the case 200, the cap plate 300 and the case 200 may be welded together along an edge of the cap plate 300 to form an airtight coupling.

In addition, the cap plate 300 may include (e.g., may be made of) a thin plate, and may be connected to (e.g., coupled to or attached to) cover the opening of the case 200. An electrolyte injection port in which a sealing stopper may be installed may be formed in the cap plate 300.

The case 200 and the cap plate 300 may include (e.g., may be made of) a conductive material. The cap plate 300 may include the terminal portion 310 electrically connected to the electrode assembly 100, and the terminal portion 310 may include an anode terminal 312 and a cathode terminal 311.

The cathode terminal 311 may be electrically connected to the cathode current collector 113 inside the case 200. The anode terminal 312 may be electrically connected to the anode current collector 123 inside the case 200.

The cathode terminal 311 and the anode terminal 312, which are electrically connected to the cathode 110 and the anode 120, may be installed to pass through the cap plate 300 to protrude to the outside.

In addition, outer peripheral surfaces of upper pillars of the cathode terminal 311 and the anode terminal 312, which protrude outward from the cap plate 300, may be threaded and fixed to the cap plate 300 through nuts.

However, the present disclosure is not limited thereto, and the cathode terminal 311 and the anode terminal 312 may have a rivet structure to be riveted, or may be welded, and may be coupled to (e.g., connected to or attached to) the cap plate 300.

The cathode terminal 311 and the anode terminal 312 may be electrically connected to current collectors including the cathode current collector 113 and the anode current collector 123 that are bonded to the cathode tab 111 and the anode tab 121.

For example, the cathode terminal 311 and the anode terminal 312 may be welded and bonded to the cathode current collector 113 and the anode current collector 123, respectively. However, the present disclosure is not limited thereto, and the cathode terminal 311 and the cathode current collector 113 may be formed to be integrally coupled to each other, and the anode terminal 312 and the anode current collector 123 may be formed to be integrally coupled to each other.

In addition, a lower insulator 320 may be installed between the electrode assembly 100 and the cap plate 300. The lower insulator 320 may include a first lower insulator and a second lower insulator, and each of the first lower insulator and the second lower insulator may be installed between the electrode assembly 100 and the cap plate 300.

As the secondary battery 10 is charged or discharged, an active material and an electrolyte may be deteriorated or decomposed due to abnormal external environments to generate gas. The gas may increase the internal pressure of the secondary battery 10 to cause additional rapid deterioration or the like, thereby reducing the stability of the secondary battery 10. The vent portion 400 may be an area through which the internal gas generated is discharged to the outside of the secondary battery 10.

As an example, the vent portion 400 may be positioned at a side of the case 200 opposite to the cap plate 300 that seals one side of the case 200. In a case in which the secondary battery 10 in which the vent portion 400 is positioned at the side of the case 200 opposite to the cap plate 300, or in other words, the secondary battery 10 including the vent portion 400 formed in the bottom surface of the case 200, is embedded in an electric vehicle, when an event such as a thermal runaway occurs in the secondary battery 10, gas may be discharged to a lower portion of an electric motor rather than towards a side at which a person is positioned, thereby improving the stability of the electric motor.

In addition, in a case of the secondary battery 10 with a narrow horizontal width, there may not be enough space to arrange the vent portion 400 in the cap plate 300. Because the vent portion 400 is not positioned in the cap plate 300 according to some embodiments, when the terminal portion 310 is disposed in the cap plate 300 and an electrolyte is injected, the cap plate 300 may have relatively enough space.

As an example, because the vent portion 400 has a fracture line 410, during a thermal runaway of the secondary battery 10, the vent portion 400 may be more easily fractured by the internal pressure of the case 200. As another example, the vent portion 400 may be formed to be thinner than other parts of the case 200 or the cap plate 300, and thus, may be fractured according to an internal pressure (e.g., a set or predetermined internal pressure) during the thermal runaway of the secondary battery 10.

In other words, the vent portion 400 may operate before the secondary battery 10 is exploded, such as the case 200 being torn, due to an event like the thermal runaway of the secondary battery 10. As the vent portion 400 operates, internal gas is discharged to the outside of the secondary battery 10 to prevent explosions.

In order to improve stability by preventing a short circuit between the electrode assembly 100 and the case 200 and/or preventing a short circuit due to an interference by an electrode lead, the secondary battery 10 may include the lower insulator 320 between the electrode assembly 100 and the cap plate 300, and/or another insulator between the electrode assembly 100 and the case 200.

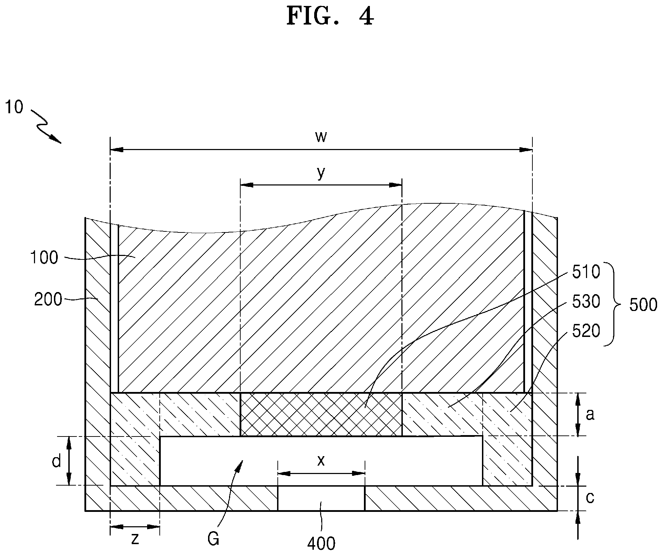

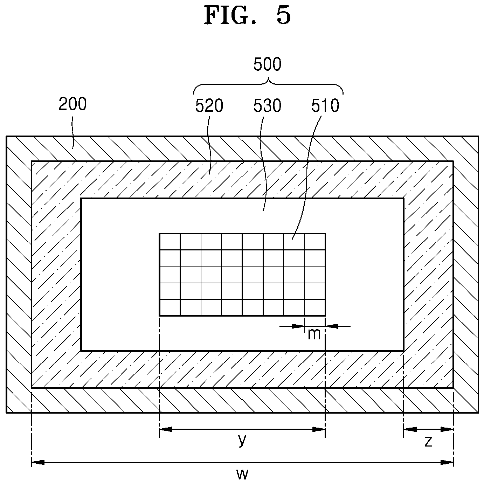

FIG. 4 is an enlarged view illustrating a portion of the cross-section of FIG. 2. FIG. 5 is a schematic cross-sectional view illustrating an example of a cross section taken along the line B-B' of FIG. 2.

Referring to FIG. 4, the secondary battery 10 may include an insulator 500 between a lower portion of the electrode assembly 100 and the case 200. The insulator 500 may prevent a short circuit due to a contact between the electrode assembly 100 and the case 200, and a material of the insulator 500 may include at least one selected from among polyvinyl chloride (PVC), polyethylene (PE), polypropylene (PP), polycarbonate (PC), nylon, polyethylene terephthalate (PET), polyurethane (PU), polyphenylene sulfide (PPS), polystyrene (PS), acrylonitrile-butadiene-styrene (ABS), polyimide (PI), polyvinylidene fluoride (PVDF), an ethylene propylene diene monomer (EDPM), and/or polyphenylene ether (PPE).

The insulator 500 may include a mesh area 510 that overlaps with the vent portion 400, and outer areas 520 positioned at both sides (e.g., opposite sides) of the mesh area 510.

If (e.g., when) a portion of the insulator 500 that overlaps with the vent portion 400 is removed to secure a smooth gas flow path, due to a movement, such as a vibration of the electrode assembly 100 when an impact is applied to the secondary battery 10, a short circuit may occur due to a contact between the electrode assembly 100 and the case 200.

In addition, the vent portion 400 may be fractured by less force as compared to the case 200. In this case, when the portion of the insulator 500 that overlaps with the vent portion 400 is removed, external materials may be introduced through the vent portion 400 to come into contact with the electrode assembly 100, which may further increase the risk of a short circuit.

However, according to some embodiments of the present disclosure, because the insulator 500 includes the mesh area 510 at a position overlapping with the vent portion 400, the risk of a short circuit due to external materials may be prevented or reduced, and a venting effect of discharging gas may be secured. The mesh area 510 may have a mesh shape, a hole shape, or various other suitable perforated shapes.

In more detail, the mesh area 510 may be positioned between the vent portion 400 and the electrode assembly 100 to structurally complement the vent portion 400 that may be vulnerable to an external impact, thereby improving the stability of the secondary battery 10.

In addition, in order to discharge the gas generated inside the electrode assembly 100 to the outside of the secondary battery 10, an appropriate sieve size m of the mesh area 510 may be configured (e.g., may be set). For example, for smooth venting and to prevent a short circuit that may be caused by external materials, the sieve size m of the mesh area 510 may be in a range of 0.05 mm to 2 mm.

The outer areas 520 may be areas that are concurrently or simultaneously in contact with a lower portion of the case 200, a side surface of the case 200, and the electrode assembly 100 at both sides (e.g., opposite sides) of the mesh area 510, and may fix a position of the insulator 500.

In other words, because a height (a+d) of the outer area 520 is greater than a thickness a of the mesh area 510, the mesh area 510 and the vent portion 400 may be spaced apart from each other to form a separation space G that may be an empty space.

The separation space G may secure a flow path and volume, through which gas inside the secondary battery 10 may be discharged, and may prevent a contact between the electrode assembly 100 and the case 200, thereby preventing or reducing a possibility of a short circuit. As an example, a separation distance d between the mesh area 510 and the vent portion 400 may be in a range of 0.5 mm to 3 mm.

In addition, the insulator 500 may further include an intermediate area 530 that is an area in contact with the electrode assembly 100 between the mesh area 510 and the outer area 520. As an example, a thickness of the intermediate area 530 may be equal to or substantially equal to a thickness of the mesh area 510. Accordingly, the separation space G, which may be an empty space between the mesh area 510 and the vent portion 400, may expand to a lower portion of the intermediate area 530 so that the secondary battery 10 may be more smoothly ventilated.

Because the vent portion 400 should operate when internal pressure is increased to a certain pressure or more due to the gas generated due to the event, such as the thermal runaway in the secondary battery 10, the vent portion 400 may desirably be fractured by less force as compared to the case 200, and as such, external foreign materials may be more easily introduced through the vent portion 400.

In addition, in order to secure a smooth gas flow path through which internal gas is smoothly discharged, or in other words, to have a venting effect, but also to have a short circuit prevention effect to protect the electrode assembly 100, in an embodiment, an area of the mesh area 510 may be greater than an area of the vent portion 400.

External foreign materials may permeate through the vent portion 400 in a diagonal direction. As an example, in which the permeation of the foreign materials may be prevented and also a sufficient venting effect may be secured, a length y of the mesh area 510 may be in a range of 100 % to 200 % of a length X of the vent portion 400.

As another example in which effects of securing a smooth gas flow path in the secondary battery 10 and preventing external foreign materials from permeating through the vent portion 400 in a diagonal direction are concurrently or simultaneously secured, the length y of the mesh area 510 may satisfy the formula x< y ≤x+2xd/c.

In this case, x may denote the length of the vent portion 400, y may denote the length of the mesh area 510, c may denote a thickness of the case 200, and d may denote a height of the separation space G.

The outer areas 520 may be areas that are concurrently or simultaneously in contact with the lower portion of the case 200, the side surface of the case 200, and the electrode assembly 100 at both sides (e.g., opposite sides) of the mesh area 510, and to stably support a position of the insulator 500, a length z of the outer area 520 may be 2 % or more of an inner width w of the case 200. However, if (e.g., when) the length z of the outer area 520 is excessively increased, the mesh area 510 and the separation space G are decreased, and thus, gas may not be smoothly discharged during venting. Accordingly, the length z of the outer area 520 may be 25 % or less of the internal width w of the case 200.

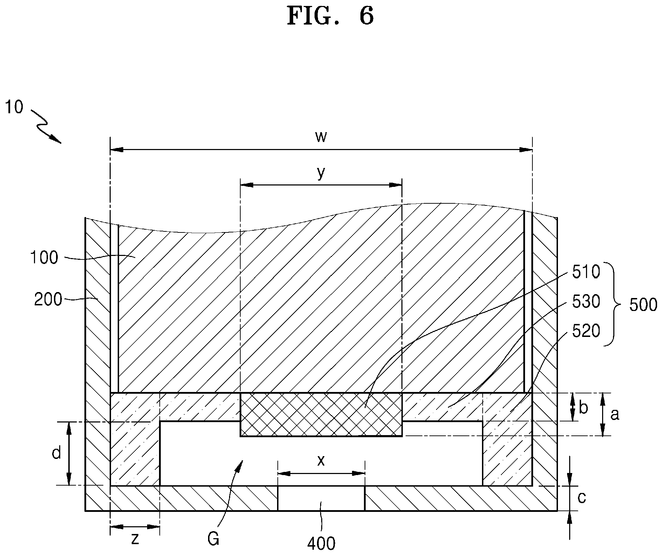

FIG. 6 is a schematic cross-sectional view illustrating an example of a portion of a cross section taken along the line A-A' of FIG. 1. The secondary battery 10 according to another embodiment may include the electrode assembly 100, the case 200 accommodating the electrode assembly 100, and an insulator 500 accommodated in the case 200 below the electrode assembly 100.

The insulator 500 may prevent a short circuit due to a contact between the electrode assembly 100 and the case 200, and a material of the insulator 500 may include at least one selected from among PVC, PE, PP, PC, Nylon, PET, PU, PPS, PS, ABS, PI, PVDF, EDPM, and/or PPE.

The insulator 500 may include a mesh area 510 having a mesh shape in an area overlapping with the vent portion 400, outer areas 520 that are areas concurrently or simultaneously in contact with a lower portion of the case 200, a side surface of the case 200, and an electrode assembly 100 at both sides (e.g., opposite sides) of the mesh area 510, and intermediate areas 530 that are areas in contact with the electrode assembly 100 between the mesh area 510 and the outer areas 520.

Because the insulator 500 includes the mesh area 510 at a position overlapping with the vent portion 400, a risk of a short circuit due to external materials may be prevented or reduced, and a venting effect of discharging gas may be secured. In addition, in order to discharge the gas generated inside the electrode assembly 100 to the outside of the secondary battery 10, an appropriate sieve size m of the mesh area 510 may be configured (e.g., may be set).

The outer areas 520 may be the areas that are concurrently or simultaneously in contact with the lower portion of the case 200, the side surface of the case 200, and the electrode assembly 100 at both sides (e.g., opposite sides) of the mesh area 510, and may fix a position of the insulator 500. A length (b+d) of the outer area 520 may be adjusted to form a separation space G that may be an empty space between the mesh area 510 and the vent portion 400. In addition, a distance d between the mesh area 510 and the vent portion 400 may be adjusted to appropriately secure a flow path and volume, through which gas inside the secondary battery 10 may be discharged, and prevent a short circuit.

Furthermore, the insulator 500 may further include the intermediate area 530 that is the area in contact with the electrode assembly 100 between the mesh area 510 and the outer area 520.

In the mesh area 510, in consideration of a thickness suitable to prevent or substantially prevent foreign materials from permeating through the vent portion 400, or in other words, a thickness suitable to structurally complement the vent portion 400, and a thickness suitable to also secure a function of a flow path for discharging the internal gas of the secondary battery 10, a thickness a of the mesh area 510 may be configured (e.g., may be set).

In addition, in order to achieve a venting effect in which the internal gas of the secondary battery 10 is smoothly discharged, it may be desirable to secure a gas flow path and a space. As an example in which a venting effect occurs more smoothly, a thickness b of the intermediate area 530 may be less than the thickness a of the mesh area 510. When the thickness b of the intermediate area 530 is less than the thickness a of the mesh area 510, as the separation space G between the insulator 500 and the vent portion 400 is widened, a space capable of accommodating the internal gas of the secondary battery 10 may be widened so that gas may more smoothly flow during venting.

According to some embodiments of the present disclosure, an insulator may be disposed between an electrode assembly and a case, and may include a mesh area at a position overlapping with a vent portion, thereby preventing a short circuit, maintaining a venting effect, and/or complementing an upper portion of the vent portion to improve the stability of a secondary battery. However, the present disclosure is not limited thereto, and other aspects and features may be included as would be understood by those having ordinary skill in the art.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A secondary battery (10) comprising:
an electrode assembly (100) comprising a cathode (110), an anode (120), and a separator (130) between the cathode (110) and the anode (120);
a case (200) accommodating the electrode assembly (100) in an internal space, and comprising a vent portion (400);
a cap plate (300) covering an upper portion of the case (200) to seal the case (200); and
an insulator (500) between the electrode assembly (100) and the case (200) within the case (200),
wherein the vent portion (400) is located at a side of the case (200) opposite to the cap plate (300), and
wherein at least an area of the insulator (500) overlapping with the vent portion (400) comprises a mesh area (510) having a mesh shape.

2. The secondary battery (10) of claim 1, wherein a separation space is located between the mesh area (510) and the vent portion (400).

3. The secondary battery (10) of claim 1 or 2, wherein the insulator (500) further comprises:
an outer area (520) concurrently in contact with the electrode assembly (100) and the case (200) at each of opposite sides of the mesh area (510); and
an intermediate area (530) between the mesh area (510) and the outer area (520), and in contact with the electrode assembly (100), and
wherein the separation space extends beneath the intermediate area (530).

4. The secondary battery (10) of any of the preceding claims, wherein an area of the mesh area (510) is greater than an area of the vent portion (400).

5. The secondary battery (10) of any of the preceding claims, wherein a sieve size of the mesh area (510) is in a range of 0.05 mm to 2 mm.

6. The secondary battery (10) of any of claims 3 to 5, wherein a thickness of the mesh area (510) is greater than or equal to a thickness of the intermediate area (530).

7. The secondary battery (10) of any of the preceding claims, wherein a length of the mesh area (510) is in a range of 100 % to 200 % of a length of the vent portion (400).

8. The secondary battery (10) of any of claims 3 to 7, wherein a length of the outer area (520) is in a range of 2 % to 25 % of an inner width of the case (200).

9. The secondary battery (10) of any of claims 2 to 8, wherein a separation distance between the mesh area (510) and the vent portion (400) is in a range of 0.5 mm to 3 mm.

10. The secondary battery (10) of any of the preceding claims, wherein the mesh area (510) is spaced from the vent portion (400).

11. The secondary battery (10) of any of claims 2 to 10, wherein a length of the mesh area (510) satisfies x< y ≤ x+2xd/c, where y denotes the length of the mesh area (510), x denotes a length of the vent portion (400), c denotes a thickness of the case (200), and d denotes a thickness of the separation space.

12. The secondary battery of claim 1, wherein a material of the insulator comprises at least one selected from among polyvinyl chloride (PVC), polyethylene (PE), polypropylene (PP), polycarbonate (PC), nylon, polyethylene terephthalate (PET), polyurethane (PU), polyphenylene sulfide (PPS), polystyrene (PS), acrylonitrile-butadiene-styrene (ABS), polyimide (PI), polyvinylidene fluoride (PVDF), an ethylene propylene diene monomer (EDPM), or polyphenylene ether (PPE).
